Europäisches Patentamt

European Patent Office

Office européen des brevets

(1) Publication number: **0 083 843**
**B1**

# EUROPEAN PATENT SPECIFICATION

(45) Date of publication of patent specification: 27.09.89

(51) Int. Cl.⁴: **G 02 B 6/18**

(21) Application number: **82306476.1**

(22) Date of filing: **06.12.82**

(54) Low dispersion, low-loss single-mode optical waveguide.

(30) Priority: **07.12.81 US 328369**

(43) Date of publication of application:
**20.07.83 Bulletin 83/29**

(45) Publication of the grant of the patent:
**27.09.89 Bulletin 89/39**

(84) Designated Contracting States:
**AT BE CH DE FR GB IT LI NL SE**

(56) References cited:
**EP-A-0 041 864**
**FR-A-2 394 100**
**GB-A-2 027 224**
**GB-A-2 100 464**
**US-A-3 997 241**
**US-A-4 149 772**
**US-A-4 185 890**
**US-A-4 265 515**

**THE BELL SYSTEM TECHNICAL JOURNAL, vol.
60, no. 5, May/June 1981, pages 583-599**

**ELECTRONICS LETTERS, vol. 12, no. 20, 30th
September 1976, pages 537-538**

(73) Proprietor: **Corning Glass Works
Houghton Park
Corning New York 14831 (US)**

(72) Inventor: **Bhagavatula, Venkata Adiseshaiah
137 Field Street Apartment 3
Mountainbrow Village New York, 14830 (US)**

(74) Representative: **Boon, Graham Anthony et al
Elkington and Fife Beacon House 113 Kingsway
London, WC2B 6PP (GB)**

Courier Press, Leamington Spa, England.

## Description

The present invention relates to an optical waveguide fiber for transmitting light wave energy in a single mode.

Single mode optical waveguide fibers have been developed that achieve transmission losses as low as 0.5 dB/km and 0.2 dB/km at wavelengths of 1300 nm and 1550 nm, respectively. Because of their low loss and because of the high bandwidths generally attributed to single-mode fibers, they are attractive as potential long distance transmission lines. However, their potentially high bandwidth can be achieved only if the design is optimized so that the total dispersion $D_t$ for the $HE_{11}$ mode is equal to zero or as near as possible to zero at the operating wavelength.

In single-mode waveguides the total dispersion is governed by the material dispersion $D_m$ and the waveguide dispersion $D_w$. For a given fiber composition the material dispersion varies as a function of wavelength. For example, the material dispersion versus wavelength curve passes through zero dispersion at a wavelength near 1280 nm for high silica content fibers. Single-mode fibers can be designed which exhibit zero total dispersion at any wavelength in a range of wavelengths above that wavelength at which the material dispersion curve passes through zero dispersion. This can be achieved by tailoring the wavelength dispersion to balance out the material dispersion at some specified wavelength which is selected because of low fiber attenuation and/or availability of light sources. The waveguide dispersion can be tailored by varying the core radius a, the core index profile or the core-cladding relative index difference $\Delta$. The term $\Delta$ is defined by the equation

$$\Delta = (n_1^2 - n_2^2)/2n_1^2$$

where $n_1$ is the peak refractive index of the core and $n_2$ is the cladding refractive index. Techniques for tailoring the zero dispersion wavelength are taught in the article by U. C. Paek et al, entitled "Dispersionless Single-Mode Light Guides With $\propto$ Inded Profiles", The Bell System Technical Journal, Volume 60, No. 5, May-June 1981, pp. 583—598 and the article by L. G. Cohen entitled "Tailoring Zero Chromatic Dispersion Into The 1.5—1.6 µm Low-Loss Spectral Region of Single-Mode Fibers", Electronics Letters, Volume 15, No. 12, June 7, 1979, pp. 134—135.

Whereas the designs taught in the aforementioned Paek et al. and Cohen et al. articles can result in a tailoring of the zero dispersion wavelength, they adversely affect other parameters. To achieve lowest system loss, there must be optimization of parameters such as spot size $w_0$ and the ratio $w_0/a$, which determine splice loss and microbend loss, respectively. Also, work done on step-index single-mode waveguides having a $\Delta$ of about 0.3% indicates that such a value of $\Delta$ may be too low insofar as microbend loss is concerned. For conventional fibers having step-index or $\propto$-type core index profiles and having $\Delta$-values greater than about 0.3%, it is difficult to meet the requirement that the zero dispersion wavelength $\lambda_0$ be quite close, i.e. withim 5 nm, to the laser source wavelength when the source wavelength is chosen to be about 1300 nm in order to reduce the loss contribution due to OH absorption which peaks at 1380 nm.

The Paek et al. publication states that as the wavelength gets longer, the guide radius must get smaller and that at longer wavelengths a much larger amount of material dispersion must be compensated for by waveguide dispersion. This requires greater precision in the waveguide parameters than when the guide is designed to operate at the zero of material dispersion. If the waveguide radius is made too small in order to balance out material dispersion, microbending losses become unacceptably high.

The W-type waveguide disclosed in U.S. Patent No. 3,997,241 issued to S. Nishida et al. offers an additional parameter which can be varied in order to vary the waveguide dispersion. This fiber comprises a core having a uniform, relatively high refractive index $n_1$ surrounded by an inner cladding layer having a relatively low refractive index $qn_1$ and an outer cladding layer having an intermediate value of refractive index $pn_1$. Since this design results in an increase of $V_c$ to a value calculated to be 3.8327, it enables light to be propagated in a single mode through a core having a radius greater than that which would be permitted in conventional step index waveguides. The normalized frequency V is expressed by the formula

$$V = \frac{2\pi a}{\lambda} \sqrt{n_1^2 - n_2^2}$$

The term $V_c$ designates the single-mode cutoff value of V. Also, bending losses are reduced by the Nishida design. This design can achieve a total dispersion that is zero or near zero over a broad range of wavelengths, but in order to achieve such broad band operation, the intermediate layer index $gn_1$ should be relative low and the outer cladding index $pn_1$ should be relatively close to the core index. In accordance with the teachings of the Nishida et al. patent, the quantity $(n-pn)/(n-qn)$ should be less than 0.1. Such a small ratio of $(n-pn)/(n-qn)$ causes manufacturing tolerances to be critical, and slight changes in the refractive index of a layer can greatly affect the slope of the waveguide dispersion curve. As the slope of the waveguide dispersion curve varies from its design value, the width of the wavelength range at which low dispersion operation can be achieved is correspondingly reduced.

The optical fiber of the Nishida et al. patent has a lower value of normalized frequency $V_1$, below which single-mode propagation does not exist. As shown in Figure 2 of that patent, single-mode propagation occurs in that range of normalized frequency between $V_1$ and $V_2$. Thus, as the index $pn_1$ of the outer cladding is increased in order to satisfy the preferred relationship for the quantit $(n-pn)/(n-qn)$, the V-value range over which single-mode operation is practical becomes small, again making the design sensitive to manufacturing tolerances.

It is therefore an object of the present invention to provide a single-mode optical waveguide which is capable of exhibiting low dispersion over a wide band of wavelengths and in which the aforementioned limitations of the prior art are eliminated or reduced.

A further object of an aspect of this invention is to provide a single-mode optical waveguide having a relatively large core radius and exhibiting relatively low attenuation due to microbending.

Another object of an aspect of the invention is to provide a single-mode optical waveguide having minimal dispersion over a wide wavelength range without lowest order mode cutoffs.

According to the present invention there is provided a single-mode optical waveguide comprising a core of transparent material having a maximum refractive index $n_1$ and a radius a, and a layer of transparent cladding material on the outer surface of said core, the refractive index $n_2$ of said cladding being less than $n_1$, said waveguide being characterized in that said core includes a region of depressed refractive index, the inner radius $a_i$ of said region being greater than zero and the maximum radius $a_o$ of said region being less than a, the values of $n_1$, $n_2$ $a_i$ and $a_o$ being such that a single single-mode signal can be simultaneously propagated through all regions of said core.

In the accompanying drawings:

Figure 1 shows a cross-sectional view of an optical waveguide fiber in accordance with the present invention.

Figures 2 and 3 are illustrative of numerous refractive index profiles which satisfy the conditions of the present invention.

Figure 4 is a graph of the quantity $Vd^2Vb/dV^2$ plotted as a function of the ratio $V/V_c$.

Figures 5 and 6 are dispersion v. wavelength curves for two fibers designed in accordance with the present invention but having different core index depression characteristics.

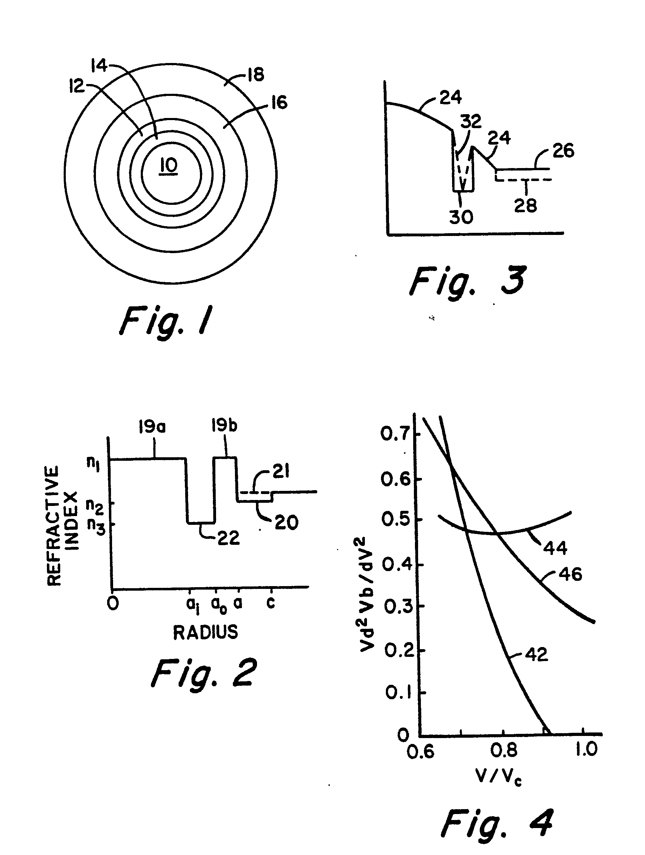

The optical waveguide of Figure 1 comprises a core having inner and outer regions 10 and 12 separated by region 14 of depressed refractive index $n_3$. One of the many refractive index profiles which satisfies the conditions of the present invention is illustrated in Figure 2, wherein inner core region 19a and outer core region 19b both exhibit a refractive index $n_1$. Even though the refractive indices of these two core regions are the same, they may be formed of different compositions. The core is surrounded by cladding layer 16 of refractive index $n_2$. The cladding may have a depressed refractive index as illustrated by solid line 20 or a non-depressed refractive index as illustrated by dashed line 21. Refractive index $n_3$ can be less than $n_2$ as indicated by line 22, or it can be equal to or greater than $n_2$. The effect of the index depression is to modify the light energy propagation characteristics of a fibre to provide a desired relationship between waveguide dispersion and wavelength. If the quantity $(n_1-n_2)/(n_1-n_3)$ is as small as 0.1 the aforementioned effect exists, but manufacturing tolerances become critical. Thus, given the manufacturing processes and fiber compositions employed at the present time, a small change in a physical property of a fiber could result in a large change in waveguide dispersion characteristics when

$$(n_1-n_2)/n_1-n_3)$$

is 0.1. When the ratio

$$(n_1-n_2)/(n_1-n_3)$$

is about 2.0 or greater, the beneficial effect of the design of the present invention becomes negligible. Therefore, the ratio

$$(n_1-n_2)/(n_1-n_3)$$

should be less than 2.0.

Whereas the core profile illustrated in Figure 2 is that of a step index waveguide, other types of core profiles including $\alpha$-profiles can be employed. The term "$\alpha$-profile" is used herein to mean that the refractive index of the core is defined by the equation

$$n(r)=n_o[1-\Delta(r/a)^\alpha]$$

where $n_o$ is the refractive index at the fiber axis. Curve 24 of Figure 3 represents an $\alpha$-profile wherein $\alpha$ equals 2. The refractive index of the cladding may have the same value as the edge of the core, as shown by solid line 26, or the refractive index of the cladding may be lower than that at the outer edge of the core as shown by dashed line 28.

The shape of the core index depression refractive index profile is a variable that has an effect on the propagation characteristics of the fiber. Instead of being flat as illustrated in the lower most portion 30 of the core profile in Figure 3, the index depression could be rounded or even pointed as illustrated by dashed line 32.

By controlling the radial position, depth, width and shape of the index depression, the propagation characteristics of the waveguide can be suitably modified to meet different requirements imposed on a single mode system. For example, assuming a given type of core index profile, different types of index depressions are required to obtain zero dispersion operation at different system wavelengths.

The manner in which the design of the present invention can be employed to produce optical waveguides having widely differing dispersion characteristics can be seen from the following description, reference being made to the graph of Figure 4. In that figure, the quantity $Vd^2(Vb)/dV^2$ is plotted as a function of the ratio $V/V_c$. The quantity $Vd^2(Vb)/dV^2$ is related to the waveguide dispersion $D_w$ as follows:

$$D_w = -\frac{n_2\Delta}{c\lambda}\left[\frac{Vd^2(Vb)}{dV^2}\right]$$

where c is the speed of light, $\lambda$ is the wavelength of light, b is the normalized propagation constant. The graph of Figure 4 enables one to compare the relative waveguide dispersions that can be obtained at different V-values for different fiber core profiles. Single mode operation takes place at values of $V/V_c$ less than 1.0. It is generally desirable to operate an optical waveguide fiber at a value of $V/V_c$ near 1.0 to minimize microbend loss. It is generally undesirable to operate a waveguide at $V/V_c$ values below 0.6. At such low values, core size is small and microbend loss tends to be large, and fiber characteristics are more sensitive to manufacturing variations.

Curves 42 and 44 are representative of waveguide dispersion characteristics of fibers having core index profiles of the type illustrated in Figure 2, the parameters of the index depression being different. In the fiber characterized by curve 42, $a_i=0.6a$, $a_o=0.9a$ and the ratio

$$(n_1-n_2)/(n_1-n_3)=0.75.$$

In the fiber characterized by curve 44, $a_i=0.4a$, $a_o=0.65a$ and the ratio

$$(n_1-n_2)/(n_1-n_3)=0.75.$$

Thus, the fibers characterized by curves 42 and 44 differ only in the radial position and the width of the core index depression.

Curve 42 crosses the x-axis at a value of $V/V_c$ close to but less than one. This is indicative of the fact that a fiber having such characteristics could be advantageously operated by a wavelength at or just above the zero material dispersion wavelength, said operating wavelength being near the single-mode cutoff wavelength. The steep slope of curve 42 suggests that the $D_w$ versus $\lambda$ curve will also exhibit a relatively large positive slope, a characteristic which gives rise to broad-banded, low dispersion operation.

Curve 44 is representative of a fiber which is capable of supplying a relatively large amount of waveguide dispersion while operating near the single-mode cutoff wavelength. Since material dispersion is relatively high at wavelengths greater than the OH-absorption peak at about 1400 nm, the fiber characterized by curve 44 would be able to supply the waveguide dispersion needed to balance out the material dispersion at wavelengths greater than 1400 nm.

Curve 46 is representative of a fiber having an $\alpha=1$ core index profile. Although this fiber is capable of operating at values of $V/V_c$ near 1.0, it is not capable of balancing out as much material dispersion as the fiber represented by curve 44, assuming operation at the same V-value.

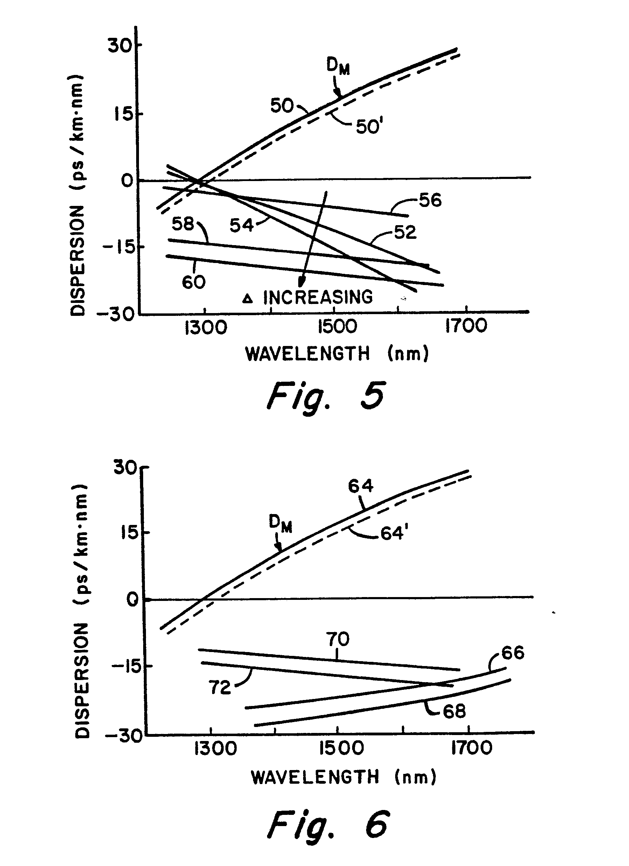

Referring momentarily to Figure 5, curve 50 represents the material dispersion of an optical waveguide fiber having a core, the inner and outer regions of which are formed of silica doped with about 3 mole percent $GeO_2$, a depression formed of silica doped with about 1.7 mole percent fluorine and a depressed index cladding formed of silica doped with about 1.0 mole percent fluorine. Curve 50' is for a similar fiber except that it is differently doped. Knowing the shape and zero crossover point of the material dispersion curve, one could choose a particular core index profile from among the various curves of Figure 4 to achieve low dispersion operation at a particular wavelength in the manner described above. For example, if it were desired to operate at a system wavelength of 1300 nm, i.e. for a design with a cutoff wavelength $\lambda_c$ of about 1250 nm, the waveguide dispersion would have to be as small as possible at that wavelength since the material dispersion is very small at 1300 nm. For single mode operation near 1300 nm the quantity $Vd^2(Vb)/dV^2$ has to be small for values of $V/V_c$ near 1.0. Curve 42 which represents one of the possible core index depression designs of the present invention, passes through zero at a $V/V_c$ value of 0.91. This indicates that such a design would be suitable for balancing out the waveguide dispersion at 1300 nm.

Figure 5 illustrates why the core index depression design characterized by curve 42 of Figure 4 is advantageous for system wavelengths around 1300 nm. For low dispersion operation over a wide range of wavelengths, the waveguide dispersion curve should have a zero dispersion intercept at a wavelength near that of the material dispersion curve 50. By appropriately selecting the core index depression characteristics and the fiber $\Delta$-value, the material dispersion can be substantially balanced out over a wide range of wavelengths.

Curve 52 and 54 of Figure 5 are dispersion curves of optical waveguide fibers having a core index design characterized by curve 42 of Figure 4. The fiber cladding is assumed to be silica, and the values of $\Delta$ for curves 52 and 54 are 1.0% and 1.3%, respectively. The material dispersion is zero at about 1300 nm. The point of zero waveguide dispersion can also be made to occur at 1300 nm by appropriately selecting the V-value of the fiber. Although curves 52 and 54 have relatively steep slopes which are useful for balancing out material dispersion over very large bands of wavelengths, the $\Delta$-values of 1.0% and 1.3% may be too high for some systems. For example, the large amount of core dopant needed to provide $\Delta$-values greater than 1.0% may, with presently employed materials, increases losses to unacceptably high values.

Curve 56 is dispersion curve of another fiber having a core index design characterized by curve 42 of Figure 4, wherein Δ is 0.5%. As described in greater detail hereinbelow, this fiber exhibits a zero dispersion wavelength of 1305 nm and a cutoff wavelength of 1120 nm. Since the slope of curve 56 is not as great as that of curve 54, the fiber characterized by curve 56 cannot provide low dispersion operation over as wide a band of wavelengths. However, the fiber of curve 56 is more practical in that it can result in lower system attenuation and larger core size as well as very good dispersion characteristics.

Curves 58 and 60, which represent the waveguide dispersion of fibers having an α=1 profile, are included for comparison purposes. The Δ-values of the fibers represented by curves 58 and 60 are 1.0% and 1.3%, respectively. It can be seen that the zero dispersion intercept of the waveguide dispersion curve will occur at about 1300 nm for this type of fiber only when Δ is made unacceptably low.

In Figure 6 curves 64 and 64', which duplicates material dispersion curves 50 and 50' of Figure 5, illustrates the fact that large waveguide dispersion is needed for zero dispersion operation at a wavelength of about 15 nm or longer. Curves 70 and 72 represent fibers having an ∝=1 index profile and Δ-values of 1.0% and 1.3%, respectively. Curves 66 and 68 are for fibers characterized by curve 44 of Figure 4 and having Δ-values of 1.0% and 1.3%, respectively. The fiber corresponding to curve 66 would provide zero dispersion operation at about 1550 nm. It can be seen that a practical system could not be designed for operation at 1550 nm if fibers of the type characterized by curves 70 and 72 were employed, since the Δ-value would have to be higher than 1.3%.

The graphs of Figures 4—6 can be generated in a number of ways by those skilled in the art. Wave equations can be solved for a given fiber refractive index profile in accordance with the techniques advanced in the publications: C. Yeh et al. "Computing the Propagation Characteristics of Radially Stratified Fibers: an Efficient Method", Applied Optics, Vol. 16, 1977, pp. 483—493 and L. G. Cohen et al. "Correlation Between Numerical Predicitions and Measurements of Single-Mode Fiber Dispersion Characteristics", Applied Optics, Vol. 19, 1980, pp. 2007—2010. Alternatively, the fibers can be fabricated and the dispersion measured in accordance with techniques advanced in the publication: L. G. Cohen et al. "A Universal Fiber Optic (UFO) Measurement System Based on a Near IR Fiber Raman Laser", IEEE Journal of Quantum Mechanics, Vol. Qe-14, 1978, p. 855 and C. Lin et al. "Pulse Delay Measurements in the Zero-Material Dispersion Region for Germanium and Phosphorus Doped Silica Fibers", Electronic Letters, Vol. 14, 1978, pp. 170—172.

Optical waveguide fibers having core index profiles in accordance with the present invention can be fabricated by conventional vapor deposition processes. A theoretical example will be given to illustrate a method of fabrication of a fiber designed for operation at 1315 nm. A process such as that disclosed in U.S. Patent No. 4,217,027 can be employed. Reference is made to Figures 1 and 2 for a description of the various layers deposited in the formation of the preform, it being noted that Figure 1 is a cross-sectional view of the resultant fiber. A fused silica tube is employed as the substrate tube which forms outer cladding layer 18. Layer 18 may function as the cladding layer of index $n_2$, but it is preferred that a layer 16 of refractive index $n_2$ depressed below that of cladding layer 18 be employed so that less dopant oncentration is required in the core to achieve a given value of Δ. This results in a lower material dispersion, thus making it easier to achieve a value of $\lambda_o$ that is equal to or less than about 1315 nm. Layer 16 can comprise silica doped with about 1 mole percent fluorine. Up to 1.0 mole percent $P_2O_5$ may be added to layer 16 to lower the softening point temperature of that layer, thereby improving process convenience. Outer core region 12 is formed by depositing a layer of silica doped with about 3 mole percent $GeO_2$ on the inner surface of layer 16. Index depression layer 14 is formed by depositing a layer of silica doped with about 1.7 mole percent fluorine. Finally, the central core region 10 is formed by depositing another layer of silica doped with about 3 mole percent $GeO_2$.

The preform is collapsed and drawn into an optical waveguide fiber having the following characteristics. The radius of core 12 is 6.2 μm. Region 14 of depressed refractive index has an outer diameter of 5.6 μm and an inner diameter of 3.6 μm. Region 16 of depressed index cladding material should have a radius greater than about 15 μm. Refractive indices $n_1$, $n_2$ and $n_3$ are 1.463, 1.456 and 1.4508, respectively. The cutoff value $V_c$ of the normalized frequency is about 5.0, and the cutoff wavelength $\lambda_c$ is about 1115 nm. The relative refractive index difference Δ is 0.5%. The spot size $w_o$ is about 3.7 μm. The waveguide dispersion characteristic of this fiber is represented by curve 56 of Figure 5. It is noted that the core radius of 6.2 μm is almost twice the core radius of a comparable step index fiber having no index depression within the core.

**Claims**

1. A single-mode optical waveguide comprising a core (10, 12, 14; 19a, 19b, 22, 24, 30, 32) of transparent material having a maximum refractive index $n_1$ and a radius a, and a layer of transparent cladding material (16; 20, 21; 26, 28) on the outer surface of said core, the refractive index $n_2$ of said cladding being less than $n_1$, said waveguide being characterized in that said core includes a region (14, 22, 30, 32) of depressed refractive index, the inner radius $a_i$ of said region (14, 22, 30, 32) being greater than zero and the maximum radius $a_o$ of said region (14, 22, 30, 32) being less than a, the values of $n_1$, $n_2$, $a_i$ and $a_o$ being such that a single single-mode signal can be simultaneously propagated through all regions of said core.

2. An optical waveguide in accordance with claim 1 wherein the quantity

$$(n_1 - n_2)/(n_1 - n_3)$$

is no greater than about 2.0, where $n_3$ is the minimum refractive index of said region (14, 22, 30, 32) of depressed refractive index.

3. An optical waveguide in accordance with claim 2 wherein said core has a substantially uniform refractive index in inner and outer regions (19a, 19b) wherein the radius is between zero and $a_i$ and between $a_o$ and a.

4. An optical waveguide in accordance with claim 2 wherein said core has a refractive index which is radially inhomogeneous in inner and outer regions (24) wherein the radius is between zero and $a_i$ and between $a_o$ and a.

5. An optical waveguide in accordance with claim 4 wherein the refractive index of at least the inner region of said core varies with the radius r in accordance with the equation

$$n(r) = n_1[1 - \Delta(r/a)\alpha],$$

wherein $\alpha$ is a parameter between zero and infinity, and wherein

$$\Delta = \frac{n_1^2 - n_2^2}{2n_1^2}$$

6. An optical waveguide in accordance with claim 5 wherein the refractive index of both the inner and outer regions (24) of said core varies in accordance with the equation

$$n(r) = n_1[1 - \Delta(r/a)\alpha].$$

7. A waveguide according to claim 1, comprising a centrally located region having a refractive index $n_1$ and radius $a_i$ surrounded by first and second regions of increasing radius having the following refractive indices and radii ($n_3$, $a_o$) and ($n_1'$, a), respectively, wherein

$$a > a_o > a_i$$

and

$$n_1 > n_1' > n_3$$

said region of radius a being surrounded by cladding comprising an inner, depressed cladding region having a refractive index $n_2$ and radius $r_{dep.\ clad}$ and an outer cladding region having a refractive index $n_{clad}$ and radius $r_{clad}$, wherein

$$r_{clad} > r_{dep.\ clad} > a$$

and

$$n_1' > n_{clad} > n_2 > n_3$$

the dispersion characteristics of said waveguide being determined by all regions of said core and cladding.

8. A waveguide according to claim 7, wherein the outer cladding region is the outer region of said waveguide.

9. A waveguide in accordance with claim 1, wherein the reference index profile of said single-mode waveguide, including the refractive indices $n$, and $n_2$ and the radii $a_i$, $a_o$ and a, is such that:

(a) said waveguide is relatively free from microbending loss, and

(b) said waveguide exhibits a waveguide dispersion characteristic which is such that:

(1) waveguide dispersion is relatively uniform with respect to wavelength so that the waveguide is insensitive to manufacturing tolerances; and

(2) waveguide dispersion is relatively large at wavelengths greater than 1400 nm so that large values of material dispersion can be completely cancelled.

10. A waveguide in accordance with claim 1 wherein the refractive index profile of said single mode waveguide is such that said waveguide exhibits low total dispersion over a wide band of wavelengths which includes the zero material dispersion wavelength and is relatively free from microbending loss.

11. A waveguide in accordance with claim 2, wherein said region (30, 32) of depressed refractive index separates said core into a centrally located region (24) having a maximum refractive index $n_1$ and a second annular region (24) having a refractive index greater than $n_3$, the refractive index of said centrally located region decreasing with increasing radius, said cladding material having a refractive index $n_2$ which is less than the refractive index of said second, annular region (24).

12. A waveguide in accordance with claim 11, wherein said cladding material of refractive index $n_2$ is surrounded by an outer cladding having a refractive index greater than $n_2$.

13. A waveguide in accordance with claim 1, where said region of depressed refractive index separates said core into an inner region having a maximum refractive index $n_1$ and an outer region (19b) of refractive index less than $n_1$, said cladding comprising an outer region having a refractive index $n_{clad}$ which is less than that of the outer region of said core and a region between said core and said cladding having a refractive index $n_2$ that is less than $n_{clad}$, the refractive index $n_3$ of said region of depressed refractive index being less than $n_2$.

**Patentansprüche**

1. Monomoder optischer Wellenleiter mit einem Kern (10), 12, 14; 19a, 19b, 22, 24, 30, 32) aus transparentem Material, das einen maximalen Brechungsindex $n_1$ und einen Radius a aufweist, und mit einer Schicht aus transparentem Mantelmaterial (16; 20, 21; 26, 28) an der Außenfläche des Kerns, wobei der Brechungsindex $n_2$ des Mantels kleiner als $n_1$ ist, dadurch gekennzeichnet, daß der Kern einen Bereich (14, 22, 30, 32) mit herabgesetztem Brechungsindex enthält, wobei der Innenradius $a_i$ dieses Bereichs (14, 22, 30, 32) größer also 0 ist und der maximale Radius $a_o$ dieses Bereichs (14, 22, 30, 32) kleiner ist als a, und bei dem die Werte $n_1$, $n_2$, $a_i$ und $a_o$ derart gewählt sind, daß ein einzelnes monomodes Signal sich gleichzeitig durch alle Bereiche des Kerns fortpflanzen kann.

2. Optischer Wellenleiter nach Anspruch 1, bei dem die Größe

$$(n_1 - n_2)/(n_1 - n_3)$$

nicht größer als etwa 2,0 ist, wobei $n_3$ den minimalen Brechungsindex des Bereiches (12, 22, 30, 32) mit herabgesetztem Brechungsindex darstellt.

3. Optischer Wellenleiter nach Anspruch 2, bei dem der Kern einen im wesentlichen gleichförmigen Brechungsindex in inneren und äußeren Bereichen (19a, 19b) aufweist, in welchem der Radius zwischen 0 und $a_i$ und zwischen $a_o$ und a beträgt.

4. Optischer Wellenleiter nach Anspruch 2, bei dem der Kern einen Brechungsindex aufweist, der in den inneren und äußeren Bereichen (24) in Radialrichtung inhomogen ist, in welchen der Radius 0 und $a_i$ und zwischen $a_o$ und a beträgt.

5. Optischer Wellenleiter nach Anspruch 4, bei dem der Brechungsindex wenigstens des inneren Bereichs des Kerns mit dem Radius r entspechend der Gleichung

$$n(r) = n_1[1 - \Delta(r/a)\alpha]$$

sich ändert, wobei $\alpha$ ein Parameter zwischen 0 und unendlich ist und wobei

$$\Delta = \frac{n_1{}^2 - n_2{}^2}{2n_1{}^2}$$

6. Optischer Wellenleiter nach Anspruch 5, bei dem der Brechungsindex sowohl des inneren als auch des äußeren Bereichs (24) des Kerns sich entsprechend der folgenden Gleichung ändert

$$n(r) = n_1[-\Delta(r/a)\alpha].$$

7. Wellenleiter nach Anspruch 1, mit einem zentral angeordneten Bereich, der einen Brechungsindex $n_1$ und einen Radius $a_i$ aufweist, welcher durch erste und zweite Beceiche mit zunehmendem Radius umgeben ist, welche die folgenden Brechungsindizes und Radien ($n_3$, $a_o$) bzw. ($n_1'$, a) haben, wobei gilt

$$a > a_o > a_i$$

und

$$n_1 > n_1' > n_3$$

wobei der Bereich mit dem Radius a von einem Mantel umgeben ist, der einen inneren Mantelbereich mit herabgesetztem Brechungsindex mit einem Brechungsindex $n_2$, und einem Radius $r_{dep.\ clad}$ und einen äußeren Mantelbereich mit einem Brechungsindex $n_{clad}$ und einem Radius $r_{clad}$ aufweist, wobei gilt

$$r_{clad} > r_{dep.\ clad} > a$$

und

$$n_1' > n_{clad} > n_2 > n_3$$

bei dem die Dispersionseigenschaften des Wellenleiters durch alle Bereiche des Kerns und des Mantels bestimmt sind.

8. Wellenleiter nach Anspruch 7, bei dem der äußere Mantelbereich den äußeren Bereich des Wellenleiters darstellt.

9. Wellenleiter nach Anspruch 1, bei dem das Brechungsindexprofil des monomoden Wellenleiter einschließlich der Brechungsindizes n und $n_2$ und der Radien $a_i$, $a_o$ und a wie folgt bestimmt sind:

(a) der Wellenleiter ist relativ frei von mikrobeugenden Verlusten, und

(b) der Wellenleiter zeigt eine Wellenleiterdispersionseigenschaft wie folgt:

(1) die Wellenleiter-Dispersion ist relativ gleichförmig gegenüber der Wellenlänge, so daß der Wellenleiter unempfindlich ist gegenüber Herstellungstoleranzen und

(2) die Wellenleiter-Dispersion ist relativ groß bei Wellenlängen über 1400 nm, so daß hohe Werte der Materialdispersion vollständig beseitigt werden können.

10. Wellenleiter nach Anspruch 1, bei dem das Brechungsindexprofil des monomoden Wellenleiter derart ist, dass der Wellenleiter eine niedrige Gesamtdispersion über einen breiten Wellenlängenbereich aufweist, der die Materialdispersionswellenlänge beinhaltet und relativ frei ist von mikrobeungenden Verlusten.

11. Wellenleiter nach Anspruch 2, bei dem ein Bereich (30, 32) mit herabgesetztem Brechungsindex den Kern in eine zentral angeordneten Bereich (24) mit einem maximalen Brechungsindex $n_1$ und einen zweiten, ringförmigen Bereich (24) mit einem Brechungsindex größer als $n_3$ unterteilt, bei dem der Brechungsindex des zentral bzw. mittig angeordneten Bereichs mit zunehmendem Radius abnimmt und das Mantelmaterial einen Brechungsindex $n_2$ besitzt, der kleiner ist als der Brechungsindex des zweiten, ringförmigen Bereichs (24).

12. Wellenleiter nach Anspruch 11, bei dem das Mantelmaterial mit dem Brechungsindex $n_2$ durch einen äußeren Mantel umgeben ist, dessen Brechungsindex größer ist als $n_2$.

13. Wellenleiter nach Anspruch 1, bei dem der Bereich mit herabgesetztem Brechungsindex den Kern in einen inneren Bereich mit einem maximalen Brechungsindex $n_1$ und einen äußeren Bereich (19b) mit einem Brechungsindex kleiner als $n_1$ aufteilt, bei dem der Mantel einen äußeren Bereich, dessen Brechungsindex $n_{clad}$ kleiner ist als der des äußeren Bereichs des Kerns, und einen Bereich zwischen dem Kern und dem Man-

tel hat, dessen Brechungsindex $n_2$ kleiner ist als $n_{clad}$, und bei dem der Brechungsindex $n_3$ des Bereichs mit herabgesetztem Brechungsindex kleiner ist als $n_2$.

## Revendications

1. Un guide d'ondes optique monomode comprenant un coeur (10, 12, 14; 19a, 19b, 22, 24, 30, 32) de matériau transparent ayant in indice de réfraction maximal $n_1$ et un rayon a, et une couche de matériau transparent de gaine (16; 20, 21; 26, 28) disposée sur la surface extérieure dudit coeur, l'indice de réfraction $n_2$ de ladite gaine étant inférieur à $n_1$, ledit guide d'ondes étant caractérisé en ce que ledit coeur comprend une région (14, 22, 30, 32) d'indice de réfraction réduit, le rayon intérieur $a_i$ de ladite région (14, 22, 30, 32) étant supérieur à zéro et le rayon maximal $a_o$ de ladite région (14, 22, 30, 32) étant inférieur à a, les valeurs de $n_1$, $n_2$, $a_i$ et $a_o$ étant telles qu'un unique signal monomode puisse être propagé simultanément à travers toutes les régions dudit coeur.

2. Un guide d'ondes optique selon la revendication 1, dans lequel la quantité

$$(n_1 - n_2)/(n_1 - n_3)$$

n'est pas supérieur à 2,0 environ, où $n_3$ est l'indice de réfraction minimal de ladite région (14, 22, 30, 32) d'indice de réfraction réduit.

3. Un guide d'onde optique selon la revendication 2, dans lequel l'indice de réfraction dudit coeur est sensiblement uniforme dans des régions intérieure et éxterieure (19a, 19b) où le rayon est comprise entre zéro et $a_i$ et entre $a_o$ et a.

4. Un guide d'ondes optique selon la revendication 2, dans lequel l'indice de réfraction dudit coeur est radialement non homogène dans des régions intérieure et extérieure (24) où le rayon est compris entre zéro et $a_i$ et entre $a_o$ et a.

5. Un guide d'ondes optique selon la revendication 4, dans lequel l'indice de réfraction d'au moins la région intérieure dudit coeur varie avec le rayon r selon l'équation

$$n(r) = n_1[1 - \Delta(r/a)\alpha]$$

dans laquelle $\alpha$ est un paramètre comprise entre zéro et l'infini et

$$\Delta = \frac{n_1^2 - n_2^2}{2n_1^2}$$

6. Un guide d'ondes optique selon la revendication 5, dans lequel l'indice de réfraction des deux régions intérieure et extérieure (24) dudit coeur varie selon l'équation

$$n(r) = n_1[1 - \Delta(r/a)\alpha].$$

7. Un guide d'ondes optique selon la revendication 1, comprenant une région centrale ayant un indice de réfraction $n_1$ et un rayon $a_i$, entourée par des première et seconde régions de rayon croissant ayant respectivement les indices de réfraction et rayons suivants: $(n_3, a_o)$ et $(n_1', a)$, où

$$a > a_o > a_i$$

et

$$n_1 > n_1' > n_3$$

ladite région de rayon a étant entourée par une gaine comprenant une région intérieure de gaine réduite ayant un indice de réfraction $n_2$ et un rayon $r_{gainre-d}$, et une région extérieure de gaine ayant un indice de réfraction $n_{gaine}$ et un rayon $r_{gaine}$, où

$$r_{gaine} > r_{gainre-d.} > a$$

et

$$n_1' > n_{clad} > n_2 > n_3$$

les caractéristiques de dispersion dudit guide d'ondes étant déterminées par toutes les régions dudit coeur et de ladite gaine.

8. Un guide d'ondes selon la revendication 7, dans lequel la région extérieure de gaine est la région extérieure dudit guide d'ondes.

9. Un guide d'ondes selon la revendication 1, dans lequel le profil d'indice de référence dudit guide d'ondes monomode incluant les indices de réfraction n et $n_2$ et les rayons $a_i$, $a_o$ et a, est tel que:

(a) ledit guide d'ondes soit relativement exempte de perte par microcourbure, et

(b) ledit guide d'ondes présente une caractéristique de dispersion du guide d'ondes qui est telle que:

(1) la dispersion du guide d'ondes est relativement uniforme vis-à-vis de la longueur d'onde, si bien que le guide d'onde est insensible aux tolérances de fabrication, et

(2) la dispersion du guide d'ondes est relativement grande aux longueurs d'onde supérieures à 1400 nm, si bien que des valeurs élevées de dispersion du matériau peuvent être totalement annulées.

10. Un guide d'ondes selon la revendication 1, dans lequel le profil d'indice de réfraction, dudit guide d'onde monomode est tel que ledit guide d'onde présente une faible dispersion totale sur une large bande de longueurs d'onde qui inclut la longueur d'onde de dispersion nulle du matériau et soit relativement exempte de perte par microcourbure.

11. Un guide d'ondes selon la revendication 2, dans lequel ladite région (30, 32) d'indice de réfraction réduit sépare ledit coeur en une région centrale (24) ayant un indice de réfraction maximial $n_1$ et en une seconde région (24) annulaire ayant un indice de réfraction supérieur à $n_3$, l'indice de réfraction de ladite région centrale diminuant avec l'augmentation du rayon, ledit matériau de gaine ayant un indice de réfraction $n_2$

qui est inférieur à l'indice de réfraction de ladite seconde région (24) annulaire.

12. Un guide d'ondes selon la revendication 11, dans lequel ledit matériau de gaine d'indice de réfraction $n_2$ est entouré par une gaine extérieure ayant un indice de réfraction supérieur à $n_2$.

13. Un guide d'ondes selon la revendication 1, dans lequel ladite région d'indice de réfraction réduit sépare ledit coeur en une région intérieure ayant un indice de réfraction maximal $n_1$ et en une région extérieure (19b) d'indice de réfraction inférieur à $n_1$, ladite gaine comprenant une région extérieure ayant un indice de réfraction $n_{gaine}$ qui est inférieur à celui de la région extérieure dudit coeur et une région comprise entre ledit coeur et ladite gaine ayant un indice de réfraction $n_2$ qui est inférieur à $n_{gaine}$, l'indice de réfraction $n_3$ de ladite région d'indice de réfraction réduit étant inférieur à $n_2$.

Fig. 1

Fig. 3

Fig. 2

Fig. 4

Fig. 5

Fig. 6

2